# EUROPÄISCHE PATENTSCHRIFT

(11) **EP 1 688 075 B1**
(45) Veröffentlichungstag und Bekanntmachung des Hinweises auf die Patenterteilung: **26.11.2008**
(21) Anmeldenummer: 06405041.2
(22) Anmeldetag: 30.01.2006
(51) Int. Cl.: A47J 31/44

(54) **Anordnung zur Erzeugung von Milchschaum und/oder zum Erhitzen von Milch**
Device for producing foamed and/or heated milk
Dispositif pour préparer du lait émulsifié et/ou chauffé

(30) Priorität: 08.02.2005 CH 1932005
(43) Veröffentlichungstag der Anmeldung: 09.08.2006
(73) Patentinhaber: Saeco IPR Limited, Dublin 12 (IE)
(72) Erfinder: Frigeri, Patrizio, 8610 Uster (CH)
(74) Vertreter: Rottmann, Maximilian

(56) Entgegenhaltungen:
- DE-A1- 4 213 895
- US-A- 4 949 631
- US-A1- 2004 029 834

## Beschreibung

Die Erfindung bezieht sich auf eine gemäss dem Oberbegriff des Anspruchs 1 ausgebildete Anordnung zur Erzeugung von Milchschaum und/oder zum Erhitzen von Milch, im Folgenden kurz als "Schäumvorrichtung" oder als "Milchschäumer" bezeichnet.

Zur Erzeugung von Milchschaum sind sogenannte Milchschäumer oder Emulgiereinrichtungen in unterschiedlichen Ausführungsformen bekannt. Diese Milchschäumer bzw. Emulgiereinrichtungen verfügen im allgemeinen über einen Dampfzufuhrkanal, der in eine Saugkammer mündet. Die Saugkammer ihrerseits ist mit einem Milchzufuhrkanal und einem Luftzufuhrkanal verbunden. Durch den Dampfstrom wird in der Saugkammer ein Unterdruck erzeugt, welcher bewirkt, dass Milch über den Milchzufuhrkanal und Luft über den Luftzufuhrkanal in die Saugkammer gesaugt werden. Das erzeugte Dampf-Luft-Milchgemisch wird in einer nachfolgenden Emulgierkammer in eine turbulente Strömung versetzt, so dass ein homogener Milchschaum entsteht. Der mit dem Milchschäumer erzeugte Milchschaum kann beispielsweise für die Herstellung von Cappuccino oder Latte Macchiato verwendet werden. Mit dem Milchschäumer kann neben der Herstellung von Milchschaum im allgemeinen auch Milch erhitzt werden.

Aus EP 0 195 750 A1 ist eine Emulgiereinrichtung genannte Anordnung zur Erzeugung von Milchschaum bekannt. Diese weist einen Düsenkörper auf, der mit einer Dampferzeuger verbunden wird. Der Düsenkörper ist in einen rohrförmigen Körper eingesetzt, der tangential in eine zylindrische Emulgierkammer mündet. Die Emulgierkammer ist auf der Unterseite mit einer Abgabeöffnung versehen. Im Innern des rohrförmigen Körpers wird eine Saugkammer gebildet, in welche auf der Oberseite ein Lufteinlasskanal und auf der Unterseite eine Milcheinlasskanal mündet. Beim Zuführen von Dampf entsteht in der Saugkammer ein Unterdruck, der das Ansaugen von Milch und Luft bewirkt. Das Gemisch aus Wasser, Dampf, Luft und Milch wird tangential in die Emulgierkammer eingeleitet, in der es in eine turbulente Strömung versetzt wird, welche den Emulgiervorgang fördern und die Kondensation des Dampfes bewirken soll. Über die Abgabeöffnung tritt die erzeugte Emulsion aus der Vorrichtung aus.

Ein Nachteil der einer solchen Anordnung anhaftet besteht darin, dass sie schnell verschmutzt, nicht mikrobizid ist, so dass die nach jedem Schäumvorgang in dem Milchschäumer zurückbleibenden Milchreste der Einwirkung von Bakterien ausgesetzt sind, was letztlich zu einem Gesundheitsrisiko führt. Um dies zu Vermeiden, musste die Anordnung bis anhin nach jedem Schäumvorgang gründlich gereinigt werden.

Sodann ist aus US 4 949 631 A eine Vorrichtung zum Schaumigschlagen von Milch bekannt, welche einen Injektor, der auf seiner Aussenseite mit einer nicht-klebenden Schicht, beispielsweise Teflon® , versehen ist, eine innere Düse und eine äussere Düse mit einer Führungshülse aufweist, wobei die innere Düse und die Führungshülse sowohl an ihrer inneren als auch ihren äusseren Oberfläche mit Teflon® beschichtet sind.

Der Nachteil dieser Vorrichtung besteht darin, dass das Aufbringen von Teflon® -Beschichtungen auf nichtplanare Körper kompliziert, aufwendig und somit kostspielig ist und Teflon® -Beschichtungen nicht mikrobizid sind.

Schliesslich sind aus US 2004/0029834 A1 mikrobizid beschichtete Artikel, insbesondere Behälter, bekannt, welche auf mindestens einem Teil der Beschichtung mit einer Silberkolloide enthaltenden, organisch modifizierten anorganischen Matrix aufweist. Diese Beschichtung kann aufgebracht werden, indem man eine Beschichtungsmasse, welche a) definierte Silanderivate und b) eine Silberverbindung enthält auf die Oberfläche aufbringt und anschliessend durch Erhitzen und/oder Bestrahlen das Silberkolloid bildet.

Der Nachteil solcher mikrobizid beschichteter Artikel besteht darin, dass das Aufbringen der mikrobiziden Beschichtung kompliziert, aufwendig und somit kostspielig ist. Weiter sind die Silanderivate zwar hydrophob, nicht aber oleophob, so dass bei einem Milchschäumer eine gründliche Reinigung nach jeder Benützung trotzdem notewendig wäre.

Aufgabe der Erfindung ist nun die Schaffung eines Milchschäumers, welcher die genannten Nachteile beseitigt.

Hierzu wird erfindungsgemäss eine Anordnung gemäss dem Kennzeichen des Anspruchs 1 bereitgestellt.

Unter "Nano-Partikel" werden hier Teilchen mit einer Abmessung von 10⁻¹⁰ bis 10⁻⁷ m, vorzugsweise von etwa 10⁻⁸ m, verstanden.

Dadurch dass mindestens ein Teil der mit Milch in Berührung gelangenden Bauteile und/oder Hohlräume der Schäumvorrichtung mit einer durch Nano-Partikel gebildeten sowohl hydrophoben als auch oleophoben Oberfläche versehen ist, kann die Verschmutzungsgefahr nachhaltig reduziert werden. Zudem sind derartige Oberflächen einfach zu reinigen.

Dadurch, dass die genannten Nano-Partikel teilweise aus Silber oder Silberverbindungen bestehen, ist eine dauernde Mikrobizität der behandelten Oberflächen gewährleistet.

Durch die Ausgestaltung des Milchschäumers gemäss dem Merkmal c) des Anspruchs 1 und Beschichtung der dort genannten Teile wird sichergestellt, dass alle wesentlichen Teile des Milchschäumers hydrophob, oleophob und mikrobizid ausgerüstet sind.

Bevorzugte Ausführungsbeispiele der Vorrichtung sind in den abhängigen Ansprüchen 2 bis 16 umschrieben.

Nachfolgend wird ein Ausführungsbeispiel einer erfindungsgemässen Anordnung anhand von Zeichnungen näher erläutert. Dabei zeigt:
Fig. 1 einen Längsschnitt durch eine Anordnung zur Erzeugung von Milchschaum und zum Erhitzen von Milch;
Fig. 2 in schematischer Darstellung einen vergrösserten Ausschnitt aus der Fig. 1.

Die Anordnung zur Erzeugung von Milchschaum und zum Erhitzen von Milch ist generell mit dem Bezugszeichen 1 versehen. Die Anordnung umfasst im wesentlichen eine Schäumvorrichtung 2, einen Milchbehälter 3 und ein Kupplungselement 4. Die Schäumvorrichtung 2 besteht aus einem Unterteil 5 und einem mittels einer Steckverbindung (?) daran fixierten Oberteil 6. Der Unterteil 5 ist dicht mit dem Oberteil 6 verbunden, wobei die dazu vorgesehenen Dichtungen nicht näher dargestellt sind. Die Schäumvorrichtung 2 ist mit einem Dampfzufuhrkanal 8, einem Lufteinlasskanal 10, einem Milchzufuhrkanal 11, einer Abgabeöffnung 12 sowie einem Entlüftungskanal 13 versehen. Der horizontal verlaufende Abschnitt des Milchkanals 11 ist mit dem Bezugszeichen 11 a versehen. Der Dampfzufuhrkanal 8 bildet endseitig eine Düse 9. Sowohl der Luftzufuhrkanal 10 wie auch der Entlüftungskanal 13 sind mit je einem Ventil 14, 15 versehen, mittels welchem der jeweilige Kanal 10, 13 verschlossen bzw. mit der Umgebungsluft verbunden werden kann. Die Schäumvorrichtung 2 ist im weiteren mit einem sich in Richtung des Bodens des Milchbehälters 3 erstreckenden, rüsselartigen Fortsatz 17 versehen ist, in welchem der Milchzufuhrkanal 11 angeordnet ist und dessen distales Ende mit einer mit dem Milchzufuhrkanal 11 verbundenen Einlassöffnung 18 versehen ist. Der Fortsatz 17 ist im Bereich der Einlassöffnung 18 beidseitig mit je einer radialen Ausnehmung 19 versehen, welche das Einströmen der Milch von dem Milchbehälter 3 in den Fortsatz 17 begünstigt. Am Eingang des Dampfzufuhrkanals 8 ist eine zylindrische Ausnehmung 21 in die Schäumvorrichtung eingelassen. Auch die Abgabeöffnung 12 mündet in eine zylindrische Ausnehmung 22. Das Kupplungselement 4 ist mit zwei zylindrischen Fortsätzen 23, 24 versehen, deren Abstand dem Abstand zwischen den beiden Ausnehmungen 21, 22 entspricht und deren Aussendurchmesser auf den Durchmesser der jeweiligen Ausnehmung 21, 22 abgestimmt ist, um eine dichte Steckverbindung zwischen dem jeweiligen Fortsatz 23, 24 und der entsprechenden Ausnehmung 21, 22 zu ermöglichen. Die beiden zylindrischen Fortsätze 23, 24 stehen über eine Bohrung 27, 28 mit einem Anschlussstutzen 25, 26 in Verbindung. Dabei dient der obere Anschlussstutzen 25 dem Anschliessen eines zu einer Dampfquelle (nicht dargestellt) führenden Schlauchs, während der untere Anschlussstutzen 26 zum Anschliessen eines zu einem Getränkeauslass (nicht dargestellt) führenden Schlauchs vorgesehen ist.

Die Schäumvorrichtung 2 ist mit einer Nut 30 zum klemmenden Fixieren an einem mit einer Ausnehmung versehenen Wandteil 31 des Milchbehälters 3 versehen. Um die Schäumvorrichtung 2 von dem Milchbehälter 3 zu entfernen, wird zuerst das Kupplungselement 4 durch seitlichen Abziehen entfernt. Danach kann die Schäumvorrichtung 2 nach oben vom Milchbehälter 3 abgehoben werden.

Um die Verschmutzungsgefahr insbesondere der mit Milch in Berührung kommenden Bauteile und Hohlräume der Schäumvorrichtung 2 zu reduzieren, sind der Dampfzufuhrkanal 8, der Lufteinlasskanal 10, der Milchzufuhrkanal 11, 11a die Abgabeöffnung 12, der Entlüftungskanal 13 wie auch die Düse 9 mit einer durch Nano-Partikel gebildeten hydrophoben und oleophoben Schicht versehen. Vorzugsweise besteht zumindest ein Teil der Nano-Partikel aus Silber oder aus Silberverbindungen. Auch ein Vernetzen der Schicht und/oder das Einbringen von Silberionen in die Schicht ist möglich. Silber hat den grundsätzlichen Vorteil, dass es eine antimikrobielle Wirkung zeigt und eine Wachstumshemmung bzw. ein Abtöten von Keimen und Bakterien bewirkt, was insbesondere bei den mit Milch in Berührung gelangenden Bauteilen und Oberflächen von entscheidender Bedeutung im Hinblick auf die gewünschten Hygieneeigenschaften der Anordnung ist. Eine solche nanodisperse Schicht ist ausgelegt, um eine sehr grosse Oberfläche zu entwickeln, wodurch das eingebrachte Silber seine Wirkung optimal entfalten kann. Vorzugsweise ist auch der Milchbehälter 3, das Kupplungselement 4 sowie der vom Kupplungselement zu dem Getränkeauslass führende Schlauch (nicht dargestellt) mit einer derartigen, durch Nano-Partikel gebildeten Schicht versehen. Die Schicht wird vorzugsweise durch Fluten der zu beschichtenden Kanäle oder durch das Eintauchen des zu beschichtenden Körpers in ein Bad aufgebracht.

Da die grundsätzliche Funktionsweise einer derartigen Anordnung bekannt ist, wird nachfolgend nur kurz auf deren beide Betriebsmodi eingegangen. Um Milch aufzuschäumen, wird das am Eingang des Lufteinlasskanals 10 angeordnete Ventil 14 geöffnet, während das am Einlass des Entlüftungskanals 13 angeordnete Ventil 15 geschlossen wird. Nun wird über die Dampfzufuhrleitung 8 Dampf zugeführt, der über die Düse 9 in den Mischkanal 16 einströmt. Der durchströmende Dampf bewirkt im Bereich der Düse 9 einen Unterdruck, der dazu führt, dass einerseits über den Fortsatz 17 Milch in den Milchzufuhrkanal 11 eingesaugt wird und andererseits Luft über den Lufteinlasskanal 10 in den horizontal verlaufenden Abschnitt 11a des Milchzufuhrkanals 11 einströmt. Die über den Lufteinlasskanal 10 einströmende Luft vermischt sich mit der durchströmenden Milch. Nach der Düse 9 vermischt sich die Milch mit dem Dampf, welcher letzterer dabei sogleich kondensiert. Durch das Kondensieren des Dampfs wird die Sogwirkung im Bereich der Düse 9 unterstützt. Das Gemisch aus Luft, Milch und Dampf bzw. Wasser strömt in den Mischkanal 16 ein, in welchem ein homogener Milchschaum entsteht, der über die Abgabeöffnung 12 aus der Schäumvorrichtung 2 austritt und über die Bohrung 28 im zylindrischen Fortsatz 24 des Kupplungselements 4 in den Anschlussstutzen 26 einströmt, von wo er über nicht näher dargestellte Mittel zu dem Getränkeauslass strömen kann.

Zum Erwärmen bzw. Erhitzen von Milch, wird sowohl das am Eingang des Lufteinlasskanals 10 angeordnete Ventil 14 wie auch das am Einlass des Entlüftungskanals 13 angeordnete Ventil 15 geschlossen. Danach wird wiederum über die Dampfzufuhrleitung 8 Dampf zugeführt, der über die Düse 9 in den Mischkanal 16 einströmt. Der im Bereich der Düse 9 durch den durchströmenden Dampf bewirkte Unterdruck führt dazu, dass über den Fortsatz 17 Milch in den Milchzufuhrkanal 11 eingesaugt wird, ohne dass jedoch Luft über den Lufteinlasskanal 10 in den horizontal verlaufenden Abschnitt 11a des Milchzufuhrkanals 11 einströmen kann. Auf diese Weise kann Milch schnell und einfach erhitzt werden.

Um ein Entleeren der milchführenden Leitungsteile, Bohrungen und Kanäle 11, 11a, 12, 16, 28 nach dem jeweiligen Schäum- bzw. Erhitzungsvorgang sicherzustellen, wird das am Einlass des Entlüftungskanals 13 angeordnete Ventil 15 nach dem jeweiligen Zubereitungsmodus geöffnet.

Trotz der relativen Schmutzunempfindlichkeit der Anordnung, sollte diese regelmässig gereinigt werden. Dies kann entweder mittels eines Spülprogramms erfolgen, bei welchem zumindest die verschmutzungskritischen Leitungsteile, Bohrungen und Kanäle 11, 11a, 12, 16, 28 mit heissem Wasser durchgespült werden. Eine andere Variante besteht darin, das Kupplungselement 4 manuell von der Schäumvorrichtung 2 zu entfernen und die Schäumvorrichtung 2 von dem Milchbehälter 3 abzuheben. Danach kann der Oberteil 6 der Schäumvorrichtung 2 von dem Unterteil 5 abgezogen werden, wodurch die verschmutzungskritischen Innenteile der Schäumvorrichtung 2, insbesondere der horizontale Abschnitt 11 a des Milchzufuhrkanals sowie die Düse 9, freigelegt werden. Die genannten Bauteile können dann beispielsweise in einem Geschirrspüler gereinigt werden. Da sämtliche Kanäle der Schäumvorrichtung mit einer durch Nano-Partikel gebildeten hydrophoben und oleophoben Oberfläche versehen sind, kann sich darin kaum Schmutz ansammeln und auch kaum Milch-Rückstände zurückbleiben. Jedenfalls können die die Anordnung bildenden Bauteile, namentlich die Schäumvorrichtung 2, der Milchbehälter 3 sowie das Kupplungselement 4 sehr einfach gereinigt werden. Zu erwähnen ist, dass die verschmutzungskritischen Bauteile, insbesondere die Innenseite des Milchbehälters 3, der Milchzufuhrkanal 11, 11a und der Mischkanal 16 der Schäumvorrichtung 2, sowie die durch den Anschlussstutzen 26 führende Bohrung 28 des Anschlusselements 4, sehr einfach zu reinigen sind, da sich in den genannten Kanälen, Leitungen und Bohrungen keine nennenswerten Milchrückstände ansammeln können.

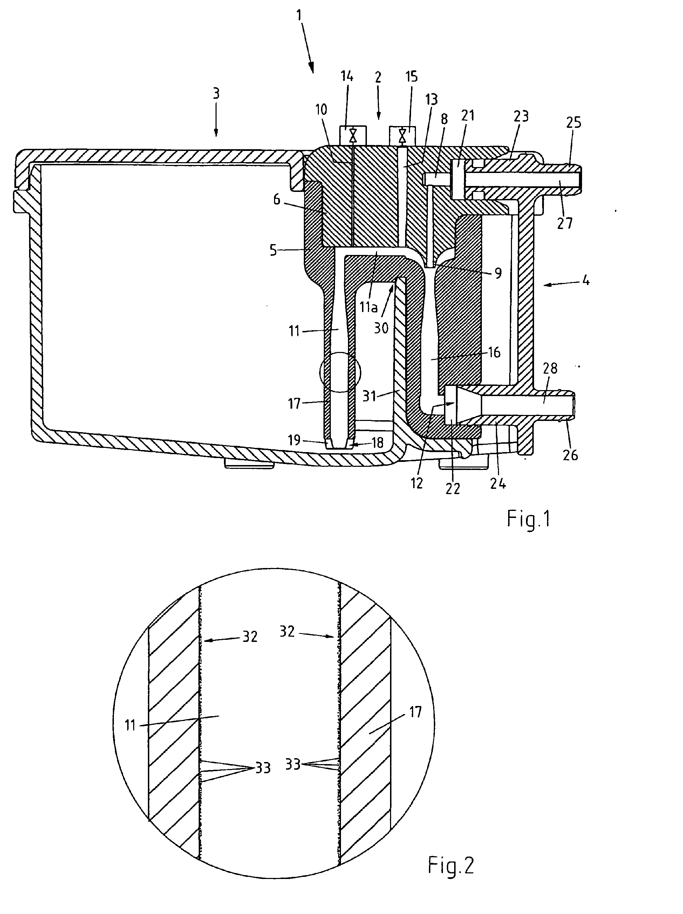

Die Fig. 2 zeigt einen vergrösserten Ausschnitt aus der Fig. 1, aus welchem in schematischer und nicht massstabgetreuer Darstellung die Beschichtung des Fortsatzes 17 ersichtlich ist. Wie dargestellt, ist die Wandung des auf der Innenseite des Fortsatzes angeordneten Milchzufuhrkanals 11 mit einer Beschichtung 32 versehen, die aus einer Vielzahl von Nano-Partikeln 33 besteht. Die die Nano-Partikel bildenden Teilchen weisen eine Abmessung in der Grössenordnung von 10⁻¹⁰ bis 10⁻⁷ m, vorzugsweise von etwa 10⁻⁸ m, auf. Es versteht sich, dass Teilchen dieser Grössenordnung nicht zeichnerisch dargestellt werden können. Insofern sollen mit dieser Zeichnung sowohl die Schicht wie auch die Teilchen nur schematisch angedeutet werden. Anstelle des Aufbringens einer durch Nano-Partikel gebildeten Beschichtung könnten die Nano-Partikel auch in die Oberfläche des entsprechenden Bauteils eingearbeitet sein.

Das Aufbringen der Nano-Partikel erfolgt in einfacher Weise im Tauchbad, durch Besprühen oder durch Fluten. Die dabei massgeblichen Parameter, wie Tauchgeschwindigkeit, Verweilzeit und Herausziehgeschwindigkeit kann der Fachmann durch einfache Versuche ermitteln.

Das dabei einzusetzende Gemisch besteht zweckmässigerweise aus:
(a) einem Nano-Partikel bildenden Grundmaterial;
(b) einem ersten Zusatz mit oleophoben Eigenschaften;
(c) einem zweiten Zusatz mit hydrophoben Eigenschaften; und
(d) Silber oder Silberverbindungen.

Anschliessend wird das beschichtete Bauteil auf etwa 80 bis 140°C erhitzt, wobei die Nano-Beschichtung polymerisiert, aushärtet, getempert wird und sich fest mit dem Bauteil verbindet.

## Patentansprüche

1. Anordnung (1) zur Erzeugung von Milchschaum und/oder zum Erhitzen von Milch, mit einer einen Dampfzufuhrkanal (8), einen Lufteinlasskanal (10), einen Milchzufuhrkanal (11) sowie eine Abgabeöffnung (12) aufweisenden Schäumvorrichtung (2), **dadurch gekennzeichnet:**
(a) **dass** mindestens ein Teil der mit Milch in Berührung gelangenden Bauteile und/oder Hohlräume mit einer durch Nano-Partikel (33) gebildeten sowohl hydrophoben als auch oleophoben Oberfläche versehen ist;
(b) **dass** die Nano-Partikel (33) teilweise aus Silber oder Silberverbindungen bestehen; und
(c) **dass** der Dampfzufuhrkanal (8) über eine Düse (9) in den Milchzufuhrkanal (11) der Schäumvorrichtung (2) mündet und der Milchzufuhrkanal (11) in einen Mischkanal (16) mündet, wobei die Düse (9), der Milchzufuhrkanal (11), die Abgabeöffnung (12) und der Mischkanal (16) mit der durch die Nano-Partikel (33) gebildeten Oberfläche versehen ist.

2. Anordnung (1) nach Anspruch 1, **dadurch gekennzeichnet, dass** die Nano-Partikel (33) in die Oberfläche eingearbeitet sind.

3. Anordnung (1) nach Anspruch 1, **dadurch gekennzeichnet, dass** die Nano-Partikel (33) in Form einer Beschichtung (32) auf die Oberfläche aufgebracht sind.

4. Anordnung nach Anspruch 1, **dadurch gekennzeichnet, dass** die Nano-Partikel (33) mit der Oberfläche eine chemische oder physikalische Bindung aufweisen.

5. Anordnung (1) nach einem der vorhergehenden Ansprüche, **dadurch gekennzeichnet, dass** die Anordnung im weiteren einen Milchbehälter (3) umfasst.

6. Anordnung (1) nach Anspruch 5, **dadurch gekennzeichnet, dass** die Schäumvorrichtung (2) und/oder der Milchbehälter (3) Mittel (30, 31) zum Fixieren der Schäumvorrichtung (2) an dem Milchbehälter (3) aufweist.

7. Anordnung (1) nach Anspruch 5 oder 6, **dadurch gekennzeichnet, dass** die Schäumvorrichtung (2) mit einem sich in Richtung des Bodens des Milchbehälters (3) erstreckenden Fortsatz (17) versehen ist, in welchem der Milchzufuhrkanal (11) angeordnet ist und dessen distales Ende mit einer mit dem Milchzufuhrkanal (11) verbundenen Einlassöffnung (18) versehen ist.

8. Anordnung (1) nach Anspruch 7, **dadurch gekennzeichnet, dass** der Fortsatz (17) im Bereich der Einlassöffnung (18) mit zumindest einer radialen Ausnehmung (19) versehen ist.

9. Anordnung (1) nach einem der vorhergehenden Ansprüche, **dadurch gekennzeichnet, dass** die Schäumvorrichtung (2) mehrteilig ausgebildet ist und die einzelnen Teile (4, 5, 6) mittels einer Steck- oder Schnappverbindung miteinander verbindbar sind.

10. Anordnung (1) nach Anspruch 9, **dadurch gekennzeichnet, dass** der Milchzufuhrkanal (11) nach dem Trennen der einzelnen Teile (4, 5, 6) zumindest teilweise freigelegt ist.

11. Anordnung (1) nach einem der vorhergehenden Ansprüche, **dadurch gekennzeichnet, dass** die Schäumvorrichtung (2) eine erste zylindrische Ausnehmung (21) aufweist, welche mit dem Dampfzufuhrkanal (8) verbunden ist.

12. Anordnung (1) nach einem der vorhergehenden Ansprüche, **dadurch gekennzeichnet, dass** die Schäumvorrichtung (2) eine zweite zylindrische Ausnehmung (22) aufweist, welche mit der Abgabeöffnung (12) verbunden ist oder diese bildet.

13. Anordnung (1) nach Anspruch 11 und 12, **dadurch gekennzeichnet, dass** die Schäumvorrichtung (2) ein Kupplungselement (4) aufweist, welches mit zwei zylindrischen Fortsätzen (23, 24) versehen ist, welche zum Ankuppeln an die erste und zweite zylindrische Ausnehmung (21, 22) ausgebildet sind, wobei am einen Fortsatz (23) eine Dampfzufuhrleitung anschliessbar ist und wobei am weiteren Fortsatz (24) eine Abgabeleitung anschliessbar ist.

14. Anordnung (1) nach einem der vorhergehenden Ansprüche, **dadurch gekennzeichnet, dass** die Schäumvorrichtung (2) einen in den Milchzufuhrkanal (11) mündenden, zur Umgebungsluft hin offenen Kanal (13) aufweist, welcher mittels eines Ventils (15) verschliessbar ist.

15. Anordnung (1) nach einem der vorhergehenden Ansprüche, **dadurch gekennzeichnet, dass** sie zusammen mit einer Espressokaffeemaschine verwendet wird oder dass sie in einer Espressokaffeemaschine zum Einsatz kommt.

16. Espressokaffeemaschine mit einer nach einem der Ansprüche 1 bis 14 ausgebildeten Anordnung (1).

## Claims

1. Arrangement (1) for producing milk froth and/or for heating milk, having a frothing apparatus (2) which has a steam supply duct (8), an air inlet duct (10), a milk supply duct (11) and a discharge opening (12), **characterized:**
(a) **in that** at least some of the components and/or cavities which come into contact with milk are provided with a both hydrophobic and oleophobic surface which is formed by nanoparticles (33);
(b) **in that** the nanoparticles (33) partly comprise silver or silver compounds; and
(c) **in that** the steam supply duct (8) issues into the milk supply duct (11) of the frothing apparatus (2) via a nozzle (9) and the milk supply duct (11) issues into a mixing duct (16), with the nozzle (9), the milk supply duct (11), the discharge opening (12) and the mixing duct (16) being provided with the surface which is formed by the nanoparticles (33).

2. Arrangement (1) according to Claim 1, **characterized in that** the nanoparticles (33) are incorporated in the surface.

3. Arrangement (1) according to Claim 1, **characterized in that** the nanoparticles (33) are applied to the surface in the form of a coating (32).

4. Arrangement according to Claim 1, **characterized in that** the nanoparticles (33) form a chemical or physical bond with the surface.

5. Arrangement (1) according to one of the preceding claims, **characterized in that** the arrangement also comprises a milk container (3).

6. Arrangement (1) according to Claim 5, **characterized in that** the frothing apparatus (2) and/or the milk container (3) have/has means (30, 31) for fixing the frothing apparatus (2) to the milk container (3).

7. Arrangement (1) according to Claim 5 or 6, **characterized in that** the frothing apparatus (2) is provided with a projection (17) which extends in the direction of the base of the milk container (3), in which projection the milk supply duct (11) is arranged, and the distal end of which projection is provided with an inlet opening (18) which is connected to the milk supply duct (11).

8. Arrangement (1) according to Claim 7, **characterized in that** the projection (17) is provided with at least one radial recess (19) in the region of the inlet opening (18).

9. Arrangement (1) according to one of the preceding claims, **characterized in that** the frothing apparatus (2) is of multipartite design and the individual parts (4, 5, 6) can be connected to one another by means of a plug-action or snap-action connection.

10. Arrangement (1) according to Claim 9, **characterized in that** the milk supply duct (11) is at least partially exposed after the individual parts (4, 5, 6) are disconnected.

11. Arrangement (1) according to one of the preceding claims, **characterized in that** the frothing apparatus (2) has a first cylindrical recess (21) which is connected to the steam supply duct (8).

12. Arrangement (1) according to one of the preceding claims, **characterized in that** the frothing apparatus (2) has a second cylindrical recess (22) which is connected to the discharge opening (12) or forms the said discharge opening.

13. Arrangement (1) according to Claims 11 and 12, **characterized in that** the frothing apparatus (2) has a coupling element (4) which is provided with two cylindrical projections (23, 24) which are designed for the purpose of coupling to the first and second cylindrical recesses (21, 22), it being possible to connect a steam supply line to one projection (23) and it being possible to connect a discharge line to the other projection (24).

14. Arrangement (1) according to one of the preceding claims, **characterized in that** the frothing apparatus (2) has a duct (13) which issues into the milk supply duct (11), is open to the ambient air and can be closed by means of a valve (15).

15. Arrangement (1) according to one of the preceding claims, **characterized in that** it is used together with an espresso coffee machine, or **in that** it is used in an espresso coffee machine.

16. Espresso coffee machine having an arrangement (1) designed according to one of Claims 1 to 14.

## Revendications

1. Dispositif (1) destiné à produire du lait émulsifié et/ou chauffé, doté d'un dispositif de moussage (2) comprenant un canal d'amenée de vapeur (8), un canal d'admission d'air (10), un canal d'amenée de lait (11) ainsi qu'une ouverture de distribution (12), **caractérisé en ce que :**
(a) au moins une partie des composants parvenant en contact avec le lait et/ou des cavités est pourvue d'une surface aussi bien hydrophobe qu'oléophobe formée par des nanoparticules (33) ;
(b) les nanoparticules (33) sont en partie constituées d'argent ou de liaisons argentées ; et
(c) le canal d'amenée de vapeur (8) débouche par une buse (9) dans le canal d'amenée de lait (11) du dispositif de moussage (2) et le canal d'amenée de lait (11) débouche dans un canal de mélange (16), la buse (9), le canal d'amenée de lait (11), l'ouverture de distribution (12) et le canal de mélange (16) étant pourvus de la surface formée par les nanoparticules (33).

2. Dispositif (1) selon la revendication 1, **caractérisé en ce que** les nanoparticules (33) sont insérées dans la surface.

3. Dispositif (1) selon la revendication 1, **caractérisé en ce que** les nanoparticules (33) sont appliquées sous forme d'un revêtement (32) sur la surface.

4. Dispositif (1) selon la revendication 1, **caractérisé en ce que** les nanoparticules (33) comprennent avec la surface une liaison chimique ou physique.

5. Dispositif (1) selon l'une quelconque des revendications précédentes, **caractérisé en ce que** le dispositif comporte en outre un récipient de lait (3).

6. Dispositif (1) selon la revendication 5, **caractérisé en ce que** le dispositif de moussage (2) et/ou le récipient de lait (3) comprend des moyens (30, 31) destinés à fixer le dispositif de moussage (2) sur le récipient de lait (3).

7. Dispositif (1) selon la revendication 5 ou 6, **caractérisé en ce que** le dispositif de moussage (2) est pourvu d'un prolongement (17) s'étendant en direction du fond du récipient de lait (3), prolongement dans lequel est disposé le canal d'amenée de lait (11) et dont l'extrémité distale est pourvue d'une ouverture d'admission (18) reliée au canal d'amenée de lait (11).

8. Dispositif (1) selon la revendication 7, **caractérisé en ce que** le prolongement (17) est pourvu dans la zone de l'ouverture d'admission (18) d'au moins un évidement radial (19).

9. Dispositif (1) selon l'une quelconque des revendications précédentes, **caractérisé en ce que** le dispositif de moussage (2) est conçu en plusieurs parties et les parties individuelles (4, 5, 6) peuvent être reliées les unes aux autres au moyen d'une connexion par fiche ou par encliquetage.

10. Dispositif (11) selon la revendication 9, **caractérisé en ce que** le canal d'amenée de lait (11) est libéré au moins en partie après la séparation des parties individuelles (4, 5, 6).

11. Dispositif (1) selon l'une quelconque des revendications précédentes, **caractérisé en ce que** le dispositif de moussage (2) comprend un premier évidement cylindrique (21), lequel est relié au canal d'amenée de vapeur (8).

12. Dispositif (1) selon l'une quelconque des revendications précédentes, **caractérisé en ce que** le dispositif de moussage (2) comprend un second évidement cylindrique (22), lequel est relié à l'ouverture de distribution (12) ou forme celle-ci.

13. Dispositif (1) selon la revendication 11 ou 12, **caractérisé en ce que** le dispositif de moussage (2) comprend un élément d'accouplement (4), lequel est pourvu de deux prolongements cylindriques (23, 24), lesquels sont réalisés pour s'accoupler aux premier et second évidements cylindriques (21, 22), une conduite d'amenée de vapeur pouvant être raccordée à un prolongement (23) et une conduite de distribution pouvant être raccordée à l'autre prolongement (24).

14. Dispositif (1) selon l'une quelconque des revendications précédentes, **caractérisé en ce que** le dispositif de moussage (2) comprend un canal (13) ouvert en direction de l'air ambiant, débouchant dans le canal d'amenée de lait (11), lequel canal peut être fermé au moyen d'une soupape (15).

15. Dispositif (1) selon l'une quelconque des revendications précédentes, **caractérisé en ce qu'**il est utilisé conjointement avec une machine à expresso ou **en ce qu'**il intervient dans une machine à expresso.

16. Machine à expresso comprenant un dispositif (1) conçu selon l'une quelconque des revendications 1 à 14.
